# EUROPÄISCHE PATENTANMELDUNG

(11) **EP 0 938 035 A2**
(43) Veröffentlichungstag der Anmeldung: **25.08.1999**
(21) Anmeldenummer: 99103186.5
(22) Anmeldetag: 18.02.1999
(51) Int. Cl.: G05G 9/047

(54) **Elektromechanische Bedieneinrichtung**

(30) Priorität: 18.02.1998 DE 19806611
(71) Anmelder: DLR Deutsches Zentrum für Luft- und Raumfahrt e.V., 53175 Bonn (DE)
(72) Erfinder: Hanke, Dietrich, 38110 Braunschweig (DE); Münscher, Dieter, 38114 Braunschweig (DE); Meins, Jürgen, Prof., 38126 Braunschweig (DE); Deeg, Christian, 38106 Braunschweig (DE)
(74) Vertreter: Einsel, Martin, Dipl.-Phys.

(57) **Zusammenfassung**

Bei einer elektromechanischen Bedieneinrichtung zur Verwendung bei Flugzeugen, Schiffen, Fahrzeugen, beliebigen Maschinen etc. mit einem Stator und einem Rotor, wobei der Stator Pole mit Nuten und der Rotor als Erregeranordnung Scheiben aufweist, sind ein oder mehrere Pole 11 mit in ihren Nuten 12 angeordneten stromführenden Leiterelementen 13 vorgesehen. Die Erregeranordnung ist beweglich und weist ein oder mehrere Scheibenelemente 21 mit dazwischen angeordneten ein oder mehreren Permanentmagnet-Ringelementen 22 auf.

## Beschreibung

Die Erfindung betrifft eine elektromechanische Bedieneinrichtung zur Verwendung in Flugzeugen, Schiffen, Fahrzeugen, beliebigen Maschinentypen etc. mit einem Stator und einem Rotor, die mittels eines Bedienungshebels relativ zueinander um einen Azimutwinkel neigbar sind.

Aus der DE 195 01 439 A1 ist eine elektromechanische Bedieneinrichtung zum ein- oder mehrdimensionalen Erfassen von Positionen oder Drehwinkeln zur Steuerung von Fahrzeugen, Bedienung von Hebezeugen sowie zur interaktiven Benutzung von Geräten beispielsweise der Datenverarbeitungstechnik bekannt. Die bekannte Bedieneinrichtung ist zum mehrdimensionalen Drehwinkelerfassen so gestaltet, daß ein beweglicher Teil der Einrichtung mit einem elektromagnetisch erzeugten Drehmoment beaufschlagt werden kann. Die bekannte elektromechanische Bedieneinrichtung besteht dabei aus einem ruhenden Teil, nämlich den Stator in Form eines Joches mit Jochbasis und Jochflanken, Polschuhen mit Nuten und Zähnen sowie die Jochbasis umgebende Spulen einerseits und dem beweglichen Teil in Form eines Rotors mit Erregerteil, oberer und unterer Polscheibe sowie Bedienhebel andererseits. Es sind keine translatorischen Freiheitsgrade einer Lagerung, die Rotor und Stator miteinander verbindet, vorgesehen. Der Rotor weist bei einer einfachen Achsenlagerung einen Freiheitsgrad, bei einer kardanischen Lagerung zwei und bei einer Kugelkopflagerung drei rotatorische Freiheitsgrade auf. Zum Erfassen des Drehwinkels sind um den Rotor herum ein oder mehrere Sensoren vorgesehen. Der Erregerteil des Rotors ist ein Zylinderring aus permanentmagnetischem Material, welcher in axialer Richtung magnetisiert ist. Der Rotor ist mittels des Bedienhebels um einen Azimutwinkel neigbar, zentrisch zwischen mehreren auf dem symmetrischen Eisenjoch aufgesetzten Polschuhen angeordnet. Auf jedem Jocharm der bekannten Bedieneinrichtung ist zumindest eine elektrische Spule angeordnet. Der Rotor ist so geschichtet, daß ein mittlerer Bereich auf seiner Ober- und Unterseite von den beiden Polscheiben eingefaßt wird. Die den Rotor umgebenden Polschuhe weisen jeweils eine Nut in der Höhe auf, daß diese im Ruhestand mit dem mittleren Teil des Rotors in ihrer Höhe übereinstimmt. Die sich durch die Nutung ausbildenden Zähne ober- und unterhalb der Nutung sind daher von ihrer Höhe her im Bereich der oberen und unteren Polscheibe angeordnet.

Der Erfindung liegt die Aufgabe zugrunde, eine elektromechanische Bedieneinrichtung zu schaffen, welche von ihrer Baugröße her deutlich kleiner ist als die bekannte elektromechanische Bedieneinrichtung.

Die Aufgabe wird durch die in den einander nebengeordneten Ansprüchen 1 und 2 definierten Erfindungen gelöst.

Dadurch wird nicht nur die angestrebte Verringerung der Bauhöhe erreicht, sondern auch eine vielseitigere Konstruktionsmöglichkeit. Im Prinzip besteht die Erfindung darin, daß jeweils zwei Polschuhe mit zwischen ihnen angeordneten Leiterelementen einen Pol bilden, der direkt auf die Erregeranordnung wirkt und somit einen sich im wesentlichen nur über die beiden Polschuhe und die Erregeranordnung schließenden Magnetfluß herstellt. Stator oder Rotor sind beweglich und der Rotor bzw. Stator fest gelagert. Der Rotor weist ein oder mehrere Scheibenelemente mit dazwischen angeordneten Permanentmagnet-Ringelementen auf. Weiterbildungen der Erfindung sind in den abhängigen Ansprüchen beansprucht.

Dadurch wird eine elektromechanische Bedieneinrichtung geschaffen, bei der der entstehende magnetische Fluß nicht mehr, wie bislang, über Poljoche und über eine ferromagnetische Grundplatte geführt werden muß. Statt der ferromagnetischen Grundplatte kann eine Grundplatte beliebigen stabilen Materials eingesetzt werden, beispielsweise aus Aluminium oder Kunststoff mit der Folge einer Gewichtsreduzierung.

Ein weiterer Vorteil der Erfindung besteht darin, daß ein konstruktiver Freiheitsgrad insbesondere zum Erhöhen der Kraft -/Drehmomentbildung bei kleinen Auslenkwinkeln eines Bedienhebels der Bedieneinrichtung dadurch geschaffen wird, daß mehrere Scheibenelemente mit dazwischen angeordneten Permanentmagnet-Ringelementen übereinander angeordnet werden. Vorteilhaft ist es außerdem möglich, eine Anpassung der aufzuwendenden Kräfte an die jeweiligen Anforderungen bereits in der konstruktiven Auslegung der elektromechanischen Bedieneinrichtung vorzusehen durch geeignete Wahl der geometrischen Gestaltung der Pole, Auslegung der Polspule, Wahl des Abstandes der Pole von dem Drehpunkt der Erregeranordnung und Wahl der jeweils paarweise gleichen Winkel der Pole zueinander in den beiden Schwenkachsen des Bedienhebels.

Werden besonders bevorzugt mehrere voneinander getrennte Spulen in den jeweiligen Nuten eines Poles angeordnet und getrennt voneinander gespeist, ergibt sich besonders vorteilhaft die Möglichkeit, eine funktionale Redundanz zu schaffen. Dadurch führt ein einfacher Fehler nicht automatisch zum Ausfall des gesamten Systems.

Bevorzugt werden der oder die Pole ringförmig so angeordnet, daß sie in ihrer Mitte die Erregeranordnung aufnehmen, so daß ein sich in den Polen aufgrund der stromführenden Leiterelemente ausbildender magnetischer Fluß sich über die Erregeranordnung schließt. Die Permanentmagnet-Ringelemente sind vorzugsweise in axialer Richtung magnetisiert. Die Pole des Stators und die Scheibenelemente des Rotors bestehen bevorzugt aus ferromagnetischem Material.

Vorzugsweise sind die in den Nuten der Pole angeordneten Leiterelemente Bestandteil zumindest jeweils einer Spule eines jeden Poles, wobei bevorzugt die Spule mit einem nach Betrag und Vorzeichen variablen Strom gespeist wird. Besonders bevorzugt sind die Seiten der Spulen in jeweils zwei in axialer Richtung übereinander angeordneten Nuten angeordnet. Vorzugsweise weist die bewegliche Erregeranordnung in diesem Falle dann zwei in axialer Richtung übereinander angeordnete Permanentmagnet-Ringelemente auf.

In einer alternativen Ausführungsform sind die Seiten der Spulen der Pole in jeweils zwei in axialer Richtung übereinander angeordneten Nuten angeordnet, wobei die bewegliche Erregeranordnung bevorzugt ein scheibenförmiges Permanentmagnet-Ringelement aufweist.

Die vorzugsweise ringförmig angeordneten Pole können bezogen auf die jeweilige Achse der Kraftwirkung unterschiedliche geometrische Gestaltungen und/oder Ausführungsformen der jeweiligen Spulen aufweisen.

Besonders bevorzugt werden die ringförmig angeordneten Pole, bezogen auf die jeweilige Achse der Kraftwirkung in einem paarweise gleichen, ansonsten unterschiedlichen geometrischen Winkel angeordnet.

Alternativ können die ringförmig angeordneten Pole vorzugsweise auch unterschiedliche Abstände vom jeweiligen Lager- bzw. Dreh- oder Gelenkpunkt der Erregeranordnung aufweisen und die Scheibenelemente der Erregeranordnung ellipsenförmig sein. Vorzugsweise sind in den Nuten der Pole mehrere elektrisch voneinander getrennte Spulen angeordnet.

Besonders bevorzugt werden die Ströme, die durch die Spulen fließen, gesteuert oder geregelt. Zu diesem Zweck wirkt eine Regeleinheit mit einer sich an diese anschließenden Stromstellereinheit zusammen. Der Regeleinheit werden extern zugeführte Signale aufgegeben. Dies sind beispielsweise die Nickposition und die Rollposition der Bedieneinrichtung sowie Schaltersignale und Zustandsinformationen. Die Stromstellersignale wirken auf die Aktuatoreinheit der Bedieneinrichtung über die stromführenden Leiterelemente in den Nuten der Pole des Stators ein.

Bei einer besonders bevorzugten Mehrfachanordnung von Permanentmagnet-Scheibenelementen wird die Kraftwirkung der Bedieneinrichtung in diesem Bereich erhöht. Dies geschieht durch Multiplikation der Feldeinflüsse bei Auslenkung, entsprechend der Anzahl der Scheiben. Für die Polanordnung und die Erregeranordnung sind zwar in Anlehnung an die aus der DE 195 01 439 A1 bekannten Bedienungseinrichtung die Begriffe Stator und Rotor verwendet worden. Anders als bei der dadurch angedeuteten Technik sollen hier diese Begriffe nur den Gegensatz zwischen fest und beweglich darstellen. Der Rotor ist also nicht durch die Drehung eines Körpers um seine Achse bestimmt. Vielmehr schwenkt der Bedienhebel Rotor oder Stator durch Änderung der Winkellage dieser Achse. Zur Definition der Richtung dieser Schwenkbewegung sind in Anlehnung an das ursprünglich gedachte Hauptanwendungsgebiet Flugtechnik die durch entsprechende Bedienung verursachten Nick- bzw. Rollbewegungen der Flugzeuge herangezogen worden. Eine Schwenkung des Bedienhebels in Richtung der Pole sei also Nickrichtung und eine Schwenkung in dazu senkrechte Richtung Rollrichtung. Für die Messung der Richtung und des Ausmaßes der Schwenkung sind Sensoren vorgesehen.

Zur näheren Erläuterung der Erfindung werden im folgenden Ausführungsbeispiele anhand der Zeichnungen beschrieben. Diese zeigen in:
- **Figur 1**: eine seitliche Schnittansicht einer ersten Ausführungsform einer erfindungsgemäßen elektromechanischen Bedieneinrichtung,
- **Figur 2**: eine Querschnittsansicht durch die Aktuatoreinheit der Bedieneinrichtung gemäß Figur 1,
- **Figur 3**: eine Schnittansicht der Bedieneinrichtung gemäß Figur 1 in um 90° gedrehter Positionierung,
- **Figur 4**: eine perspektivische Ansicht der Bedieneinrichtung gemäß Figur 1,
- **Figur 5**: zwei Seitenansichten der Bedieneinrichtung gemäß Figur **1** mit Angabe der jeweiligen Auslenkungswinkelbereiche,
- **Figur 6**: eine prinzipielle Ansicht des Anschlusses von Bedieneinrichtung, elektronischer Einheit und Datenverarbeitungsstation,
- **Figur 7**: eine schematische Darstellung der Regelkreise der Aktuatoreinheit,
- **Figur 8**: eine schematische Darstellung eines Blockschaltbildes zur Verdeutlichung der Ansteuerung der Aktuatoreinheit,
- **Figur 9**: ein Diagramm der Auftragung von Kraft bzw. Drehmoment über dem Auslenkungswinkel der Bedieneinrichtung bei konstantem Strom,
- **Figur 10**: eine Feldbilddarstellung für eine erfindungsgemäße Bedieneinrichtung mit Einfachanordnung von Permanentmagnet-Scheibenelementen im unausgelenkten Zustand,
- **Figur 11**: eine Feldbilddarstellung wie Figur 10 im ausgelenkten Zustand,
- **Figur 12**: eine Feldbilddarstellung wie Figur 10 im ausgelenkten Zustand,
- **Figur 13**: eine Feldbilddarstellung für eine erfindungsgemäße Bedieneinrichtung mit Doppelanordnung von Permanentmagnet-Scheibenelementen im unausgelenkten Zustand,
- **Figur 14**: eine Feldbilddarstellung wie Figur 13 im ausgelenkten Zustand,
- **Figur 15**: eine Feldbilddarstellung wie Figur 13 im ausgelenkten Zustand,
- **Figur 16**: eine Feldbilddarstellung wie Figur 13 im ausgelenkten Zustand, und
- **Figur 17**: eine Ansicht einer anderen Ausführungsform mit schwenkbarem Stator und ortsfest gelagertem Rotor.

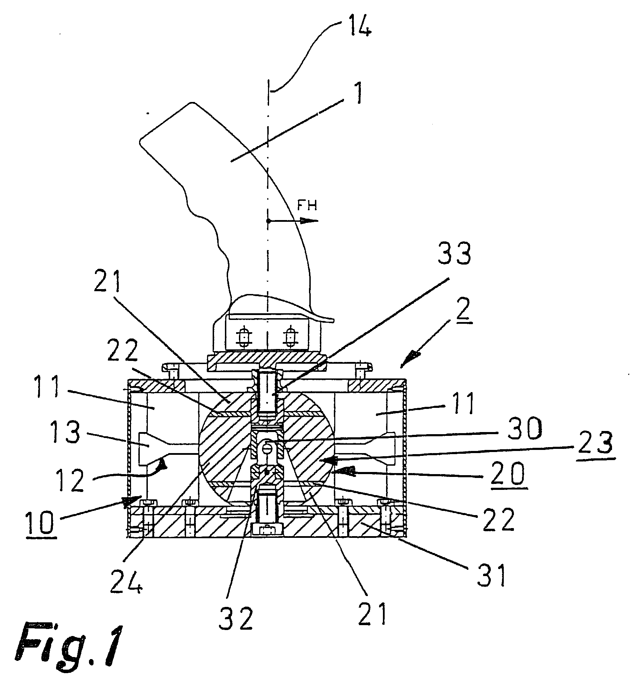

In **Figur 1** ist eine seitliche Schnittansicht einer ersten Ausführungsform einer elektromechanischen Bedieneinrichtung dargestellt. Die Bedieneinrichtung weist einen Bedienhebel 1 auf. Dieser ist mit einer Aktuatoreinheit 2 verbunden. Er ist gegenüber dieser in unterschiedlichen Richtungen kippbar. Diese Kippbarkeit wird durch ein Gelenk 30 innerhalb der Aktuatoreinheit 2 geschaffen. Dieses ist einerseits über ein erstes Gelenkelement 32 mit einer Montageplatte 31 der Aktuatoreinheit verbunden. Andererseits ist es über ein zweites Gelenkelement 33 mit dem Bedienhebel 1 verbunden.

Um das Gelenk 30 und die Gelenkelemente 32, 33 herum ist ein im folgenden als Rotor 20 bezeichnetes bewegliches, schwenkbares Teil der Aktuatoreinheit 2 vorgesehen. Achse dieses Rotors 20 ist die senkrecht gezeichnete Achse 14 der Bedieneinrichtung. Sie ist oder muß nicht eine Drehachse für den Rotor 20 sein. Der Rotor 20 weist ein Metallkugelelement 23, insbesondere eine Stahlkugel, mit äußeren Scheibenelementen 21 sowie einem mittleren Element 24 auf. Diese sind in axialer Richtung, das ist die Richtung der gezeichneten Achse, von Permanentmagnet-Ringelementen 22 unterbrochen. In der Ausführungsform gemäß Figur 1 sind zwei solcher Permanentmagnet-Ringelemente 22 vorgesehen. Vorzugsweise sind die Permanentmagnet-Ringelemente in axialer Richtung magnetisiert. Das Metallkugelelement 23 besteht bevorzugt aus ferromagnetischem Material, insbesondere Stahl. Bei jeder Schwenkung des Rotors 20 um die Gelenke 32, 33 sind die genannten axialen Richtungen also nicht mehr deckungsgleich mit der gezeichneten Achse 14 der Bedieneinrichtung.

Der Rotor ist inmitten eines Stators 10 beweglich angeordnet. Der Stator 10 weist direkt den Rotor 20 umlagernde Pole 11 auf. Diese sind im wesentlichen ringförmig um den Rotor 20 angeordnet. Sie weisen mehr oder weniger tiefe Nuten 12 auf. Am Ort oder innerhalb dieser Nuten 12 sind jeweils stromführende Leiterelemente 13 angeordnet. Die Tiefe der Nuten 12 kann auch Null werden, wenn gedruckte Spulen oder Flachspulen verwendet werden. Bevorzugt sind die Pole aus ferromagnetischem Material gefertigt, wodurch aufgrund des in den stromführenden Leiterelementen fließenden Stromes innerhalb der Nuten der Pole sich der dadurch entstehende magnetische Fluß über die inmitten der Pole beweglich angeordnete Erregeranordnung des Rotors 20 schließt.

Das in den Nuten 12 der Pole 11 angeordnete jeweilige stromführende Leiterelement 13 ist vorzugsweise Bestandteil von zumindest jeweils einer Spule je Pol 11. Eine solche Spule wird mit einem nach Betrag und Vorzeichen variablen Strom gespeist.

Anstelle der zwei in axialer Richtung übereinander angeordneten Permanentmagnet-Ringelemente des Rotors 20 kann auch lediglich ein Permanentmagnet-Ringelement als Ringscheibe angeordnet werden. Die jeweilige Spule eines Poles lagert dabei mit ihren Seiten in zwei in axialer Richtung übereinander angeordneten Nuten 12, wobei in Figur 1 lediglich die Spule dargestellt ist.

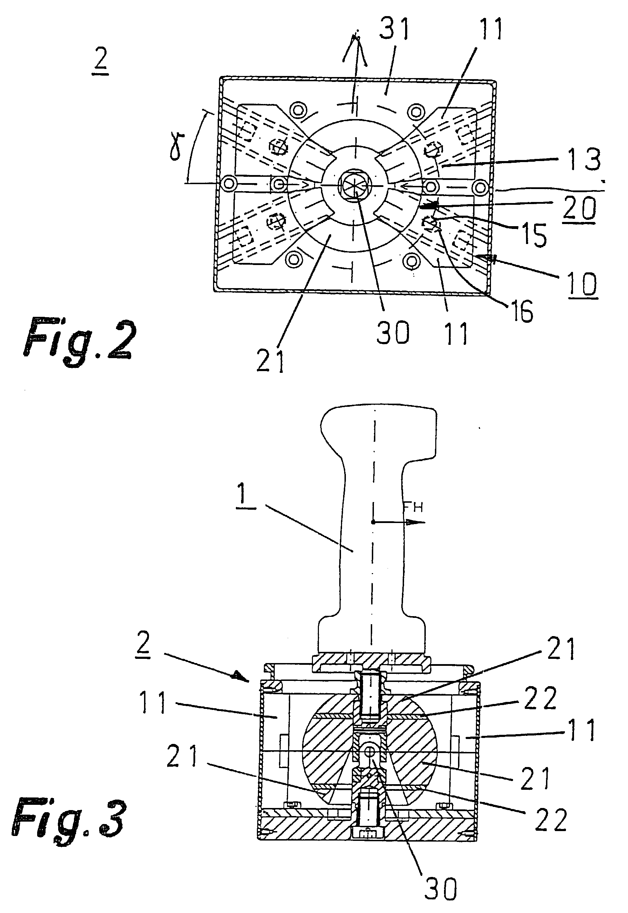

In **Figur 2** ist eine Querschnittsansicht der Aktuatoreinheit 2 gezeigt. Dabei ist besonders die geometrische Gestaltung der Pole 11 deutlicher sichtbar. Die stromführenden Leiterelemente 13 sind gestrichelt dargestellt. Durch entsprechende Wahl der geometrischen Gestaltung der Pole und/oder Ausführung der Spulen hinsichtlich ihrer stromführenden Leiterelemente 13 kann auch die jeweilige Achse der Kraftwirkung für die ringförmig angeordneten Pole unterschiedlich gestaltet werden. Bei symmetrischer Verteilung der Pole um die Erregeranordnung des Rotors 20 ist die Kraftwirkung in den beiden Richtungen (Nick- oder Rollrichtung) gleich, wenn, wie in Figur 2 dargestellt, jeweils Paare von Polen gebildet werden, die bezogen auf die jeweilige Achse der Kraftwirkung, paarweise unterschiedliche geometrische Winkel ihrer Anordnung innerhalb der Aktuatoreinheit aufweisen. Dadurch wird erreicht, daß für die Kraftwirkung die Eigentümlichkeiten der menschlichen Hand berücksichtigt werden, nämlich, daß eine Kraft vom menschlichen Körper weg stärker ist als die seitlich dazu.

Anstelle lediglich einer Spule in einer Nute 12 eines Pols 11 können alternativ auch mehrere elektrisch voneinander getrennte Spulen innerhalb der Nuten angeordnet sein. Anstelle einer solchen Anordnung von mehreren voneinander getrennten Spulen in den jeweiligen Nuten 12 eines Poles 11 kann auch eine getrennte Speisung dieser getrennten Spulen erfolgen. Dadurch wiederum kann eine funktionale Redundanz geschaffen werden, da jede Spule für sich wirkt. Ein Ausfall von einer Spule führt dadurch nicht zum Gesamtausfall des Systems. Die Pole 11 können in Richtung auf die Achse 14 verschoben werden. Schrauben 15 und Langlöcher 16 deuten dies an. Zu diesem Zweck sind die Pole 11 auf der Grundplatte 31 nach Art einer Schwalbenschwanzverbindung verschiebbar gelagert. Die Pole können auch zwecks Justierung der Symmetrie oder Unsymmetrie.entlang eines Kreisbogens um die Achse 14 verschoben werden

**Figur 3** zeigt eine weitere Schnittansicht der Bedieneinrichtung gemäß Figur 1. Dabei sind die Pole nun in der jeweilig anderen Querschnittsansicht zu sehen. Der Bedienhebel 1 kann nicht nur in Richtung des Pfeiles gemäß Figur **1**, sondern auch in Richtung des Pfeiles gemäß Figur 3 ausgelenkt werden. Auch dieses läßt das kordanische Gelenk 30 zu. Um bei kleinen Auslenkwinkeln die Kraftbildung bzw. Drehmomentbildung zu erhöhen, werden anstelle nur eines Permanentmagnet-Ringelementes 22 mehrere von diesen übereinander mit jeweils dazwischen angeordneten Scheibenelementen 21 des Metallkugelelementes 23 vorgesehen. Dies bedeutet also einen konstruktiven Freiheitsgrad zur Anpassung an jeweils kleine Auslenkwinkel.

Auch der Abstand der Pole von dem Gelenk 30 als Erregeranordnungsdreh- und Lagerpunkt kann unterschiedlich variiert werden. Dadurch kann ebenfalls eine Anpassung der Kräfte an die jeweiligen Anforderungen des Einzelfalles vorgenommen werden.

Es ist weiterhin möglich, die Pole in Kreisrichtung verschiebbar zu lagern, um die Pole sowohl in symmetrischer als auch in unsymmetrischer Position einstellbar zu machen.

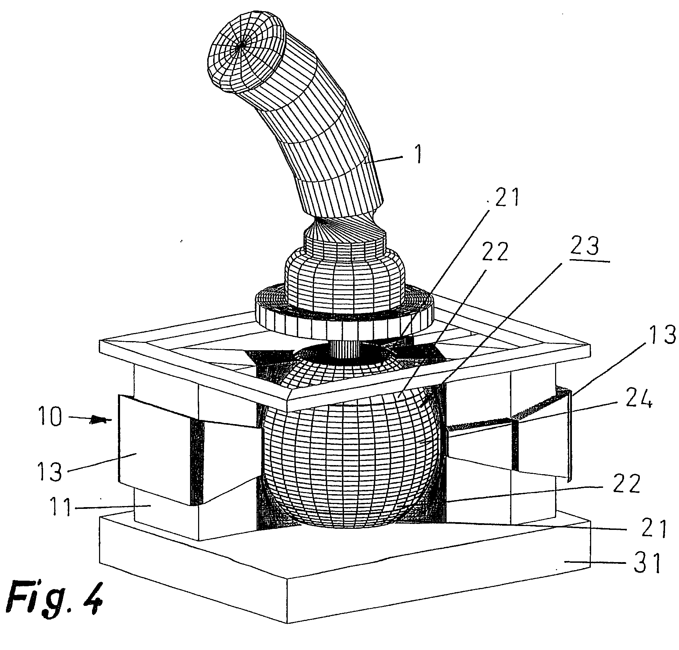

**Figur 4** zeigt eine perspektivische Ansicht der Bedieneinrichtung gemäß Figur 1. Deutlich zu erkennen ist dabei die Anordnung des kugelförmigen Rotors 20 mit den beiden oben und unten angeordneten Permanentmagnet-Ringelementen 22. Diese sind eingefügt in das Metallkugelelement 23. Dieses weist die beiden außenseitigen (oberen und unteren) Scheibenelemente 21 auf sowie das mittlere Element 24.

Da ein Stator 10 lediglich zur Hälfte dargestellt ist, wird der Einblick auf das Metallkugelelement 23 ermöglicht. Das stromführende Leiterelement 13 des Stators 10 ist dabei verdeutlicht. Vorzugsweise ist dieses als Erregerspule eine Kupferwicklung. Der Pol 11 bzw. die Pole 11 sind vorzugsweise aus Eisen gefertigt.

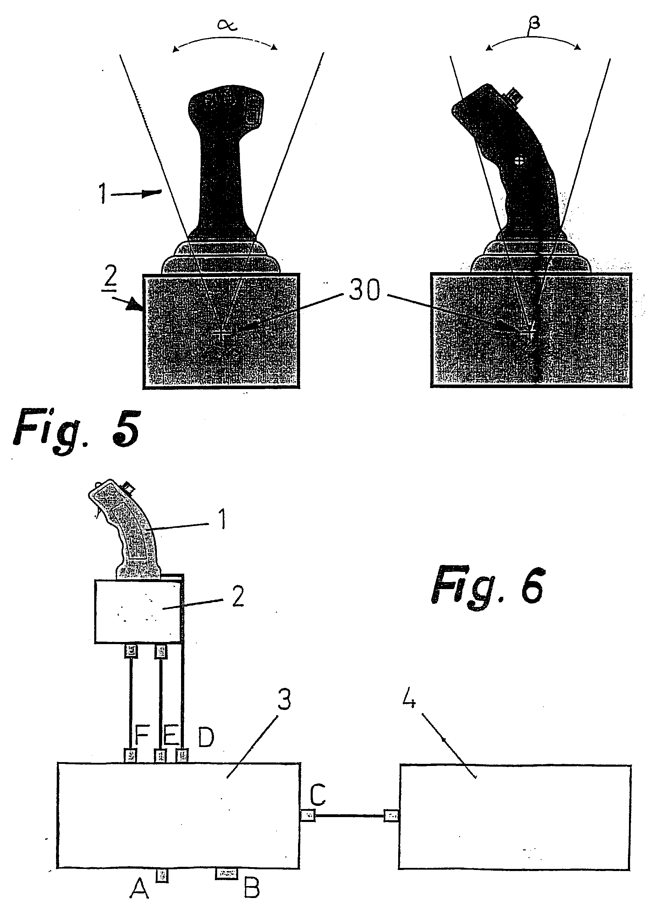

Figur 4 ist auch die räumliche Anordnung des Bedienhebels 1 deutlich zu entnehmen. Dieser kann in verschiedene Raumrichtungen geschwenkt werden und nimmt dabei das Metallkugelelement und somit den Rotor 20 mit. Die Schwenkmöglichkeiten sind Figur 5 zu entnehmen.

In **Figur 5** ist, jeweils als Seitenansicht, die Ansicht gemäß Figur 3 und daneben die Ansicht gemäß Figur 1 der elektromechanischen Bedieneinrichtung dargestellt. Skizziert sind dabei jeweils die möglichen Auslenkwinkel α und β, bezogen auf den Drehpunkt der Erregeranordnung in Form des Gelenkes 30. Beispielsweise kann der Winkel α zwischen -20° und +20° bei einer maximalen Kraft Fₘₐₓ von 50 N gewählt werden. Der Winkel β kann beispielsweise bei einer aufzuwendenden Kraft von Fₘₐₓ= 120 N zwischen +16° und -16° betragen.

Die Abmessungen der Aktuatoreinheit betragen beispielsweise 130 mm mal 165 mm. Die Höhe der Aktuatoreinheit kann dann zu 95 mm gewählt werden. Der Abstand der mit einem Kreuz gekennzeichneten Mitte des Bedienhebels zu dem Drehpunkt in Form des Gelenkes 30 beträgt beispielsweise 140 mm bei einer Gesamthöhe der elektromechanischen Bedieneinrichtung von 261 mm.

**Figur 6** zeigt die elektrischen Schnittstellen zwischen elektromechanischer Bedieneinrichtung mit Aktuatoreinheit 2 und einer Elektronikeinheit 3 sowie einer Datenverarbeitungseinheit 4. Die Aktuatoreinheit 2 sendet über eine Leitung F Signale zu der Elektronikeinheit 3. Die Elektronikeinheit ihrerseits ist an eine Stromversorgung A angeschlossen und versorgt ebenfalls die Aktuatoreinheit über eine Leitung E mit Strom. Eine weitere Leitung D führt von dem Bedienhebel 1 direkt zur Elektronikeinheit. Über diese wird der Auslenkwinkel erfaßt und übermittelt.

Die Elektronikeinheit 3 ist mit einer RS 232-Schnittstelle B versehen, um an einen Rechner angeschlossen werden zu können. Darüberhinaus ist sie über eine Leitung C, nämlich einen Datenbus, insbesondere einen luftfahrtspezifischen Datenbus für Avioniksysteme, mit der Datenverarbeitungseinheit 4 verbunden.

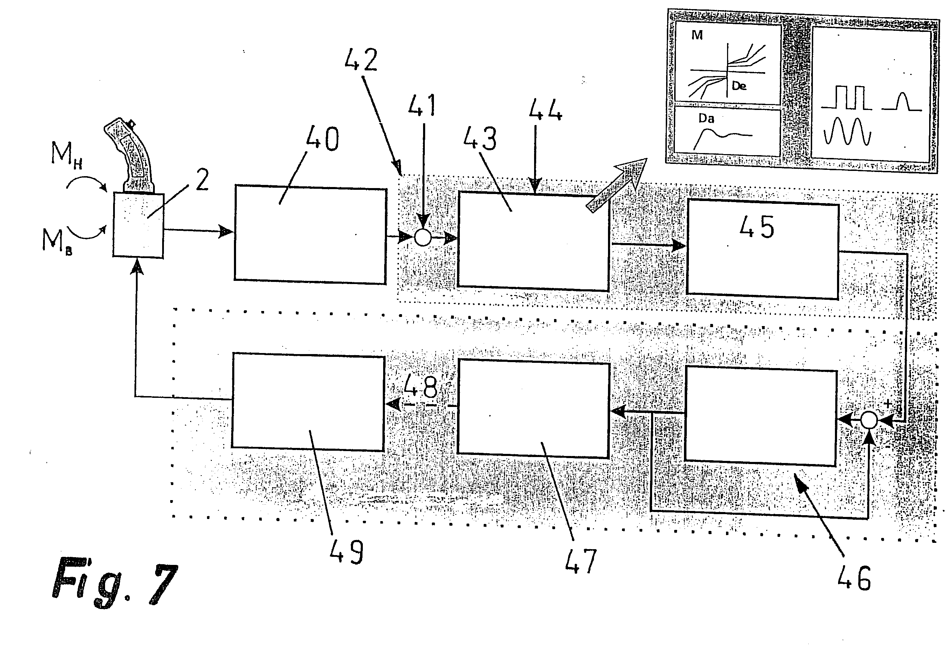

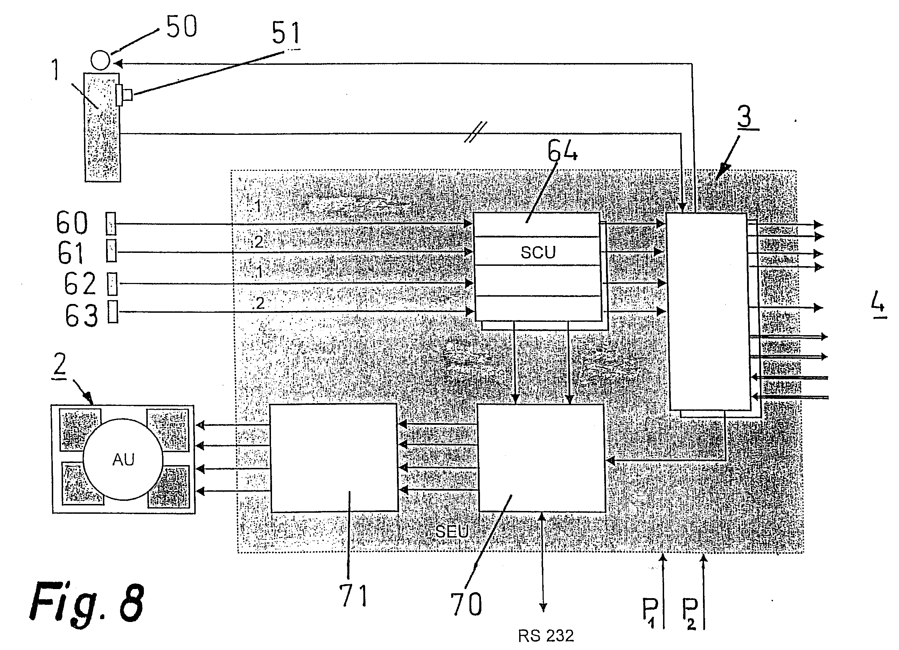

In den folgenden **Figuren 7 und 8** ist näher der innere Aufbau der Schaltungen bzw. Steuer- und Regelkreise der Stromversorgung von Aktuatoreinheit und Elektronikeinheit dargestellt. Ausgehend von der Bedieneinrichtung wird durch die bedienende Hand ein Moment M_{H} in Richtung des oberen Pfeiles ausgeübt. Der Bedienhebel zeigt dadurch ein in entgegengesetzter Richtung wirkendes Moment M_{B}. Der Regelkreis funktioniert dann wie folgt:

Zunächst wird die Position des ausgelenkten Bedienhebels 1 mittels eines Sensormittels 40 erfaßt. Dieses wirkt vorzugsweise optisch. Diese Position stellt die Ist-Position dar. Von außen wird dann eine Soll-Position 41 auf eine Summationsstelle aufgegeben. Diese ist in einen Mikrocontroller 42 implementiert. Es wird zwischen der Soll-Position 41 und der von dem Sensormittel 40 ermittelten Ist-Position eine Verknüpfung vorgenommen und als Parameter 43 angegeben. Diesem werden zusätzliche Daten 44 aufgegeben. Der Parameter 43 beinhaltet beispielsweise das über der Auslenkung aufgetragene Moment M, die Dämpfung Da sowie die vorgegebenen Anregungsschwingungsformen als Rechteck- oder Sinusschwingung oder als Impuls. Aus diesen Parametern wird ein Sollstrom 45 gebildet. Dieser wird auf eine Summationsstelle zur Regelung des Stromes in einem Stromregelkreis 46 aufgegeben. Der entsprechend geregelte Strom wird den Polen und Spulen zuführt, hier in Form des Kästchens 47 dargestellt.

Durch Zusammenwirken der Pole und Spulen ergibt sich das magnetische Feld 48, welches auf den Rotor wirkt. Dieser ist hier durch das Kästchen 49 symbolisiert.

Der Rotor wiederum wirkt auf die Bedieneinrichtung zurück, genau genommen auf das Moment M_{B} des Bedienhebels 1.

Stromregelkreis 46, Pole und Spulen 47, magnetisches Feld 48 und Rotor 49 bilden zusammen den elektromagnetischen Aktuator.

**Figur 8** zeigt eine Trennung des Bedienhebels 1 und der Aktuatoreinheit (AU) 2 sowie der Elektronikeinheit 3. Der Bedienhebel weist eine Leuchtdiode als Statusanzeige auf seiner Oberseite auf. Darüberhinaus weist der Bedienhebel 1 seitlich einen Schalter 51 auf. Über diesen Schalter können Signale an die Elektronikeinheit 3 gesandt werden. Beispielsweise können solche Signale spezifische Schaltersignale, u.a. sog. SIM-OFFs, Priority-Daten oder sog. Funkschalter- oder COM-Daten sein.

Der Elektronikeinheit 3 werden weiterhin die Nick- und die Rollposition des Bedienhebels eingegeben. Dabei gibt es jeweils eine positive und eine negative Auslenkung, welche jeweils mit einer Datenleitung 1. und 2. angezeigt ist. Die jeweiligen Ist-Werte der Nickpositionen 60, 61 sowie die jeweiligen Ist-Werte der Rollpositionen 62, 63 des Hebels 1 werden in eine Signalaufbereitungseinheit SCU, Bezugszeichen 64 eingegeben. Zusammen mit den Schaltersignalen vom Schalter 51 werden sie zur Duplex-DVS, also zur Datenverarbeitungseinheit 4, weitergegeben. Eine weitere Information ist dabei die Statusangabe (vgl. Leuchtdiode 50), welche ebenfalls als Information an die Duplex-DVS gegeben wird.

Von der Duplex-DVS (Datenverarbeitungseinheit 4) gelangen ebenfalls Informationen in Form von Daten zu der Elektronikeinheit 3 zurück, nämlich Soll-Werte und ermittelte Regelabweichungen. Hierbei sind die Kennlinienparameter für die Nick- und Rollposition, die Dämpfung für die Nick- und Rollposition, die Nick- und Rollposition selbst, die Statusanzeige (An/Aus) sowie die Excitation (An/Aus), also die Anzeige der Auslenkung des Bedienhebels als Anzeigen der Systemzustände enthalten.

All diese Daten werden zusammen mit der aufgenommenen Nick- und Rollposition einer Regeleinheit 70 aufgegeben. Diese ist vorzugsweise als Mikroprozessor mit einer RS 232-Schnittstelle zu einem Rechner ausgebildet.

Über P1 und P2 wird die Elektronikeinheit 3 mit Strom versorgt.

Von der Regeleinheit 70 werden die Ausgangsdaten auf eine Stromstellereinheit 71 aufgegeben. Durch diese werden die Spulenströme entsprechend gesteuert. Letztendlich findet also durch extern zugeführte Signale, welche der Regeleinheit aufgegeben werden, welche wiederum auf die nachfolgende Stromstellereinheit wirkt, eine entsprechende Steuerung bzw. Regelung der Ströme der Spulen innerhalb der Nuten der Pole des Stators statt. Dieses Einwirken der Stromstellereinheit 71 auf die Aktuatoreinheit (AU) 2 ist ebenfalls in Figur 8 durch Pfeile skizziert.

Die erfindungsgemäße elektromechanische Bedieneinrichtung ist also extrem kompakt und weist nur ein zentrales kardanisches Gelenk 30 auf. Darüberhinaus zeigt die Bedieneinrichtung nur geringe Reibung und Totzonen. Der Aktuator ist vorteilhaft integriert als zentraler elektromagnetischer Aktuator. Darüberhinaus sind auch keine beweglichen Stangen oder Teile für die Bedieneinrichtung erforderlich, insbesondere sind weder Kraftsensoren noch Tachogeneratoren, Zahnräder oder Kupplungen erforderlich. Vorteilhaft sind Selbstzentrierungskräfte nach Wegfall der Stromversorgung vorgesehen. Die jeweilige Position des Bedienhebels wird optisch gemessen. Eine hohe Bandbreite wird durch Unterbrecher (Chopper) mit einer Frequenz von 20 kHz und Mikroprozessoren mit einer Abtastrate von 400 µs vorgesehen. Vorteilhaft entsteht kein Lärm bei der Bedienung. Die Kräfte werden einwandfrei erzeugt, ohne daß durch Stromschwankungen überlagerte Störmoden auftreten. Die erfindungsgemäße elektromechanische Bedieneinrichtung ist daher ideal geeignet für eine hochfrequente Abtastregelung.

Zusätzlich zu den in den Figuren 1 bis 4 dargestellten Ausführungsformen lassen sich auch größere und hinsichtlich ihrer Formgebung anders gestaltete elektromechanische Bedieneinrichtungen im Sinne der Erfindung schaffen. Diese sind vorteilhaft jedoch stets kleiner dimensioniert und leichter als entsprechende passive Bedieneinrichtungen oder aktive Bedieneinrichtungen mit Servomotoraktivierung.

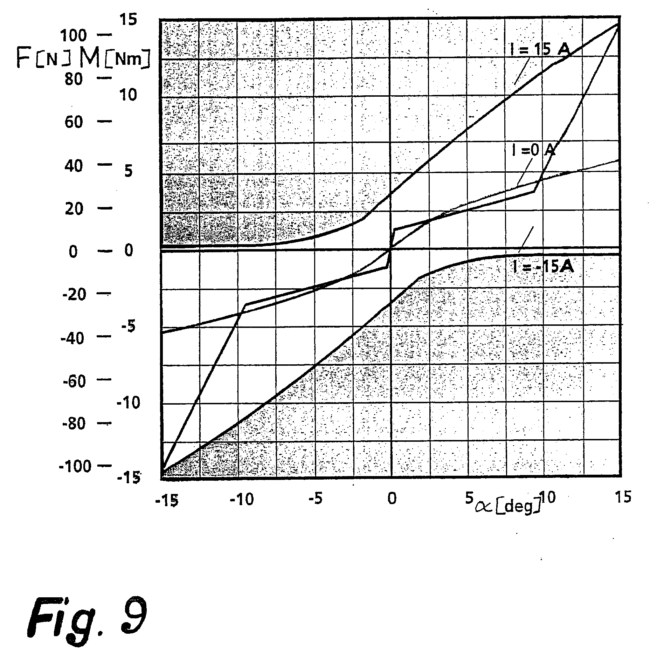

In **Figur 9** ist ein Diagramm dargestellt, das in Auftragung der durch den eingestellten Strom (konstanter Strom) eingestellten Kraft F in N oder des erzeugten Drehmomentes M in Nm über dem Auslenkungswinkel α ein Kennlinienfeld zeigt, innerhalb dessen sich verschiedenste Kennlinienverläufe realisieren lassen. Zugrundegelegt sind für die Grenzlinien die Verläufe bei maximalem Strom I = ±15 A sowie bei I = 0 A, wobei in letzterem Fall lediglich die durch die Permanentmagnet-Ringelemente erzeugten Kräfte wirken. Die in dem mittleren Bereich des Feldes dargestellte, die I = 0 A - Linie schneidende Kennlinie mit geraden Teilabschnitten stellt eine für Flugbedingungen typische Kennlinie dar.

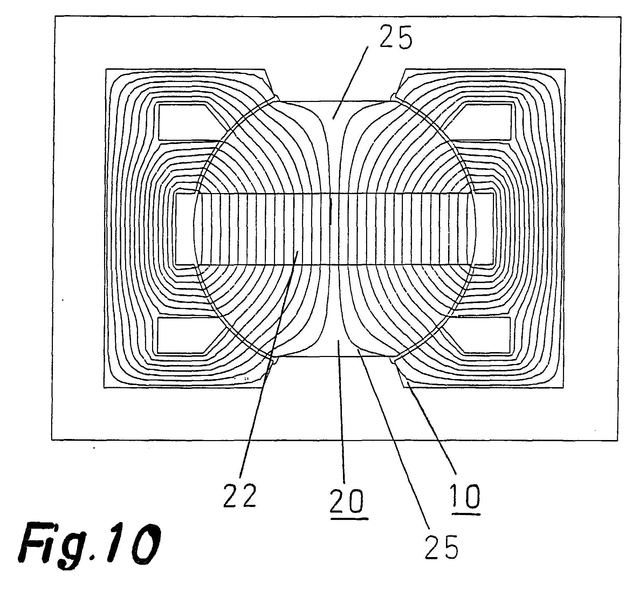

Die **Figuren 10 bis 16** zeigen Feldverläufe, eingezeichnet in eine Querschnittsansicht durch die Bedieneinrichtung gemäß Figur 1, bzw. eine alternative Ausführungsform von dieser. Figur 10 gibt dabei den Feldverlauf durch eine Bedieneinrichtung mit einfacher Permanentmagnet-Ringelement-Anordnung wieder. Das Ringelement 22 ist mittig zwischen den beiden Metallkugelelementsegmenten 25 des Rotors 20 angeordnet. Im nicht-ausgelenkten Zustand (Figur 10) verlaufen die Feldlinien innerhalb von Stator 10 und Rotor 20 auf beiden Seiten spiegelsymmetrisch. Bei der Auslenkung 0 Grad ist einerseits eine Durchflutung von bis zu ±2 kA bzw. ein Drehmoment von ±4,56 Nm oder aber eine Durchflutung von bis zu ±4 kA bzw. ein Drehmoment von ±10,4 Nm vorgesehen. Die Tiefe der Bedieneinrichtung beträgt 40 mm.

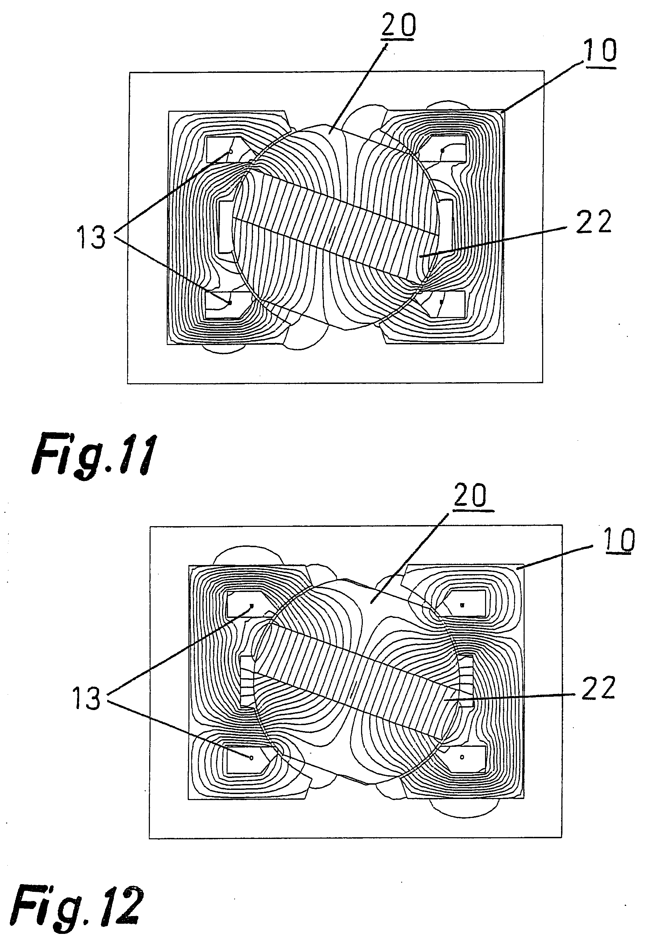

In **Figur 11** ist ein Auslenkungswinkel von 20 Grad dargestellt. Die Durchflutung beträgt entweder bis zu -2 kA oder -4 kA entsprechend einem Drehmoment von +19,2 Nm bzw. +28 Nm. Die Feldlinien laufen nun außerhalb von Stator und Rotor, was das Auftreten der entsprechend gewünschten Stellkraftsignale anzeigt.

**Figur 12** zeigt denselben Auslenkungswinkel von 20 Grad bei jedoch einer Durchflutung von bis zu +2 kA oder +4 kA, entsprechend einem Drehmoment von -4,4 bzw. -0,28 Nm. Der Feldlinienverlauf zeigt deutlich das entgegengesetzt wirkende Drehmoment. Der Feldverlauf ist nicht mehr kontinuierlich durch den Stator gehend, sondern bildet Feldlinien um die Zentren der Wicklungen herum.

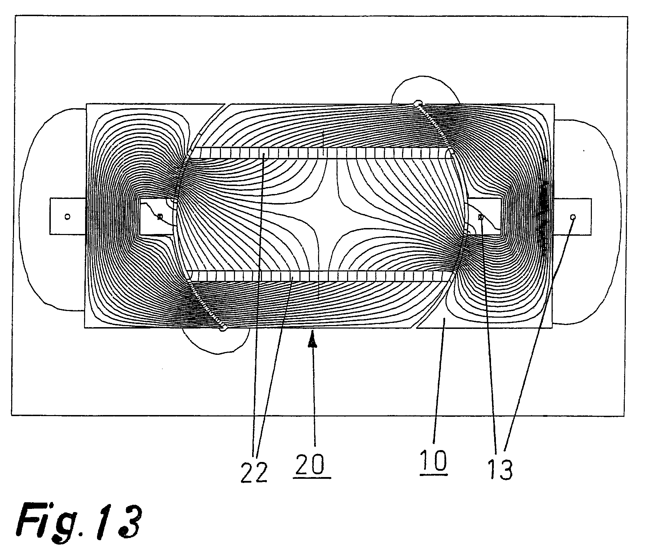

**Figur 13** zeigt den Feldinienverlauf bei einer Bedieneinrichtung mit zwei Permanentmagnet-Ringelementen, wie sie bereits in Figur 1 zu sehen ist. In der Position gemäß Figur 13 ist die Bedieneinrichtung nicht ausgelenkt. Es stellt sich dabei ein verhältnismäßig gleichförmiger Feldlinienverlauf ein. Dieser ist drehsymmetrisch hinsichtlich des Mittelpunktes des Rotors 20. Die Feldlinien drängen dabei von dem Mittelpunkt des Rotors weg in Richtung nach außen.

Bei der Auslenkung 0 Grad wird eine Durchflutung von ±2 kA bzw. ein Drehmoment von ±11,2 Nm vorgehalten, d.h. im Rahmen der Steuerung möglich gemacht, bei einer Tiefe von 40 mm (Tiefe der Bedieneinrichtung).

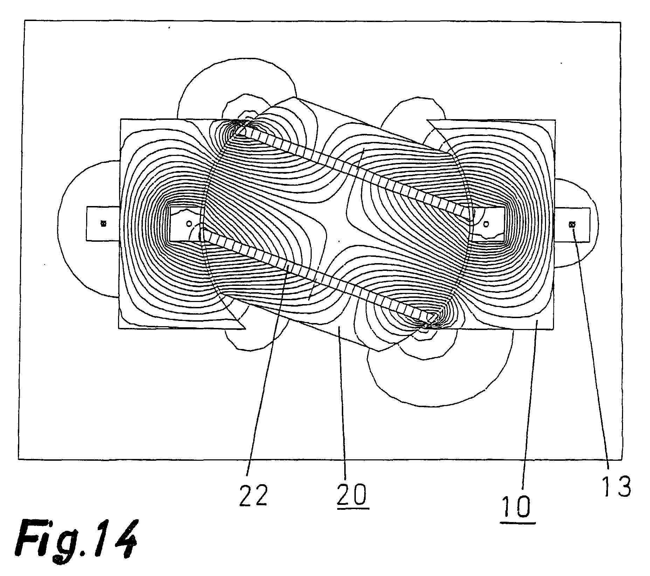

**Figur 14** zeigt die Ausführungsform der Bedieneinrichtung gemäß Figur 13 in Auslenkung um einen Winkel von 20 Grad bei einer Durchflutung von 1 kA bzw. einem Moment von 3,88 Nm. Es bildet sich dadurch weiterhin eine im wesentlichen drehsymmetrische Anordnung der Feldlinien aus. Dies beruht im wesentlichen auf der Anordnung der beiden Permanentmagnet-Ringelemente in dem Unterschied zu dem lediglich in der Mitte angeordneten einen Permanentmagnet-Ringelement gemaß der Figuren 10 bis 12. Die Feldlinien verlaufen bei der Auslenkung gemäß Figur 14 allerdings ebenfalls außerhalb von Stator und Rotor. Die Feldlinien bilden sich jeweils dort, wo die Permanentmagnet-Ringelemente an schmalere Eckbereiche des Stators bzw. der Pole treffen, konzentriert um diese Bereiche herum aus.

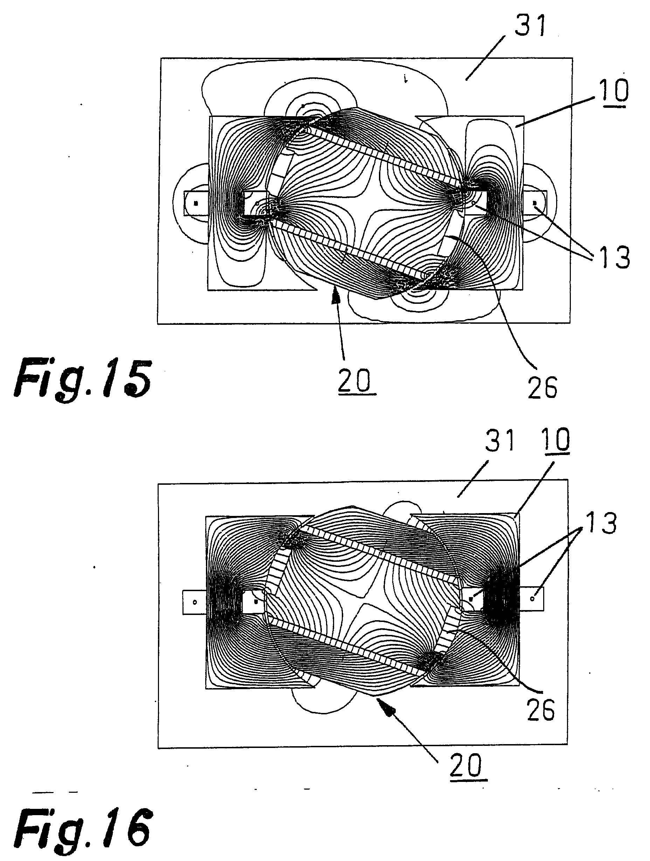

Im Unterschied zu Figur 14 zeigt **Figur 15** eine Auslenkung von 20 Grad bei jedoch einer Durchflutung von -2 kA bzw. einem Drehmoment von +14,4 Nm. Der Feldlinienverlauf zeigt sich hier sehr viel weiter nach außen tretend und in den Eckbereichen konzentrierter als bei dem in Figur 14 dargestellten. In dieser Figur sind im Rotor 20 Nuten 26 vorgesehen, mit denen der Feldverlauf beeinflußbar ist. Diese Nut wirkt auf die Bewegung des Hebels 1 wie ein Druckpunkt oder eine Raststellung. Auch kann dadurch die Kraftwirkung für kleine Winkel erhöht werden. Die äußere rechteckige Feldlinienbegrenzung ist nicht durch magnetische Eigenschaften einer Platte gegeben, sondern durch ein Zeichnungsverfahren.

Werden bei einer Auslenkung von 20 Grad anstelle der -2 kA jetzt +2 kA bzw. ein Drehmoment von -2,34 Nm vorgesehen, ergibt sich der Feldlinienverlauf gemäß **Figur 16.** Dieser ist sehr gleichförmig, wobei sich insbesondere in den Polen des Stators nahezu spiegelsymmetrische Verläufe ergeben, und auch in den beiden äußeren Scheibenelementen des Rotors verhältnismäßig gleichmäßig verteilte Linienverläufe auftreten.

Aus den vorhergehenden Figuren wird deutlich, daß bei Mehrfachanordnung von Permanentmagnet-Ringelementen die Kraftwirkung erhöht wird durch Multiplikation der Feldeinflüsse bei der Auslenkung. Hierbei ist die Anzahl der Ringelemente von besonders großer Bedeutung, was insbesondere aus dem Vergleich der Figuren 10 bis 12 bzw. 13 bis 16 hervorgeht.

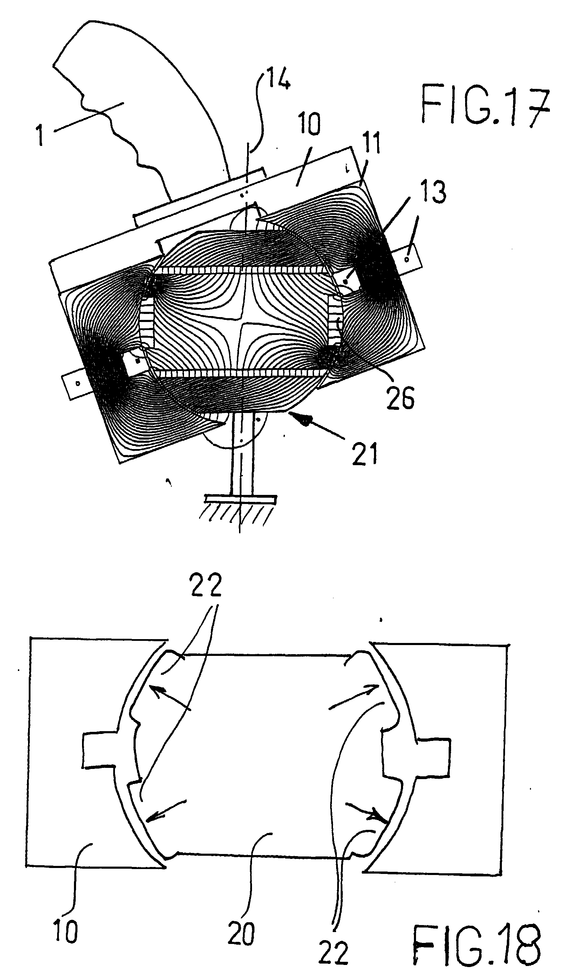

**Figur 17** zeigt eine Abwandlung, bei der der Rotor 20 fest angeordnet und der Stator schwenkbar ist.

Mit Bedieneinrichtungen gemäß den Figuren 1 bis 17 kann also eine Bedienung ausgeführt und über die elektronische Steuerung und über die Spulen sofort eine Rückwirkung ausgelöst werden. Es ist aber auch für Lehrzwecke möglich, die Steuerung auf eine Vielzahl von Schülereinrichtungen wirken zu lassen. Die Konstruktion erlaubt weiterhin die oder viele Bedieneinrichtungen willkürlich zu steuern, beispielsweise durch ein Computerprogramm oder Fernsteuerung. Die so gesteuerte Bewegung des Bedienungshebels 1 wirkt wie die bekannte mechanische Mitführung der Steuereinrichtung eines Copiloten. Die Neigung des Rotors 20 kann beispielsweise durch ein Kardangelenk oder eine Kugelkopflagerung innerhalb des Rotors 20 ermöglicht werden. Dabei kann der Rotor zusätzlich auch noch um die Achse 14 gedreht werden.

Bei einem bevorzugten Ausführungsbeispiel ist eine Neigung in Richtung eines Meridians um bis zu ± 20 ° (Azimutwinkel) vorgesehen und eine Verdrehung um die Achse 14 ohne Beschränkung. Die Permanentmagnete können, wie dargestellt, axial magnetisiert werden, aber auch radial, wie in **Figur 18** gezeigt. Eine inhomogene Magnetisierung könnte genutzt werden, um eine Zentrierung des beweglichen Teils um die axiale Achse zu erreichen.

### Bezugszeichenliste

- 1: Bedienhebel
- 2: Aktuator-Einheit
- 3: Elektronik-Einheit
- 4: Datenverarbeitungseinheit
- 10: Stator
- 11: Pol
- 12: Nute
- 13: stromführendes Leiterelement
- 14: Achse
- 15: Schrauben
- 16: Langloch
- 20: Rotor
- 21: Scheibenelement
- 22: Permanentmagnet-Ringelement
- 23: Metallkugelelement
- 24: mittleres Element
- 25: Metallkugelelement-Segment
- 26: Nuten
- 30: Gelenk
- 31: Montageplatte
- 32: Gelenkelement
- 33: Gelenkelement
- 40: Sensormittel
- 41: Sollposition
- 42: Mikrocontroller
- 43: Parameter
- 44: Daten
- 45: Soll-Strom
- 46: Stromregelkreis
- 47: Pole und Spulen
- 48: magnetisches Feld
- 49: Rotor
- 50: LED
- 51: Schalter
- 60: Nickposition 1
- 61: Nickposition 2
- 62: Rollposition 1
- 63: Rollposition 2
- 64: SCU
- 70: Regeleinheit
- 71: Stromstellereinheit
- α: Auslenkwinkel
- β: Auslenkwinkel
- P1: Stromversorgung
- P2: Stromversorgung
- A: Stromversorgungsanschluß
- B: RS 232-Schnittstelle
- C: Leitung (Daten)
- D: Leitung (Position)
- E: Leitung (Stromversorgung)
- F: Leitung (Signale)

## Patentansprüche

1. Elektromechanische Bedieneinrichtung, mit einem Stator und einem mittels eines Bedienungshebels relativ zum Stator in verschiedene Richtungen neigbaren Rotor, von denen der Stator Pole mit je zwei Polschuhen und Wicklungen und der Rotor eine Erregeranordnung, insbesondere Permanentmagnete enthält, zur Verwendung bei Flugzeugen, Schiffen, Fahrzeugen, beliebigen Maschinen etc.,
**dadurch gekennzeichnet,**
**daß** die Wicklung des Stators (10) für jeden Pol (11) stromführende Leiterelemente (13) enthält, die zwischen den Polschuhen des jeweiligen Pols (11) angeordnet sind, und jeder Pol (11) des Stators (10) über die Polschuhe mit dem und über den ihm zugewandten Teil der Erregeranordnung des Rotors (20) direkt einen geschlossenen Magnetkreis bildet.

2. Elektromechanische Bedieneinrichtung, mit einem Bedienungshebel, mit einem Rotor und einem Stator, von denen der Stator Pole mit je zwei Polschuhen und Wicklungen und der Rotor eine Erregeranordnung, insbesondere Permanentmagnete enthält, zur Verwendung bei Flugzeugen, Schiffen, Fahrzeugen, beliebigen Maschinen etc.,
**dadurch gekennzeichnet,**
**daß** der Rotor (20) fest angeordnet und der Stator (10) mittels des Bedienungshebels relativ zum Rotor in verschiedene Richtungen neigbar ist,
**daß** die Wicklung des **Stators** (10) für jeden Pol (11) stromführende Leiterelemente (13) enthält, die am Pol (11) oder in Nuten (12) zwischen den Polschuhen des jeweiligen Pols (11) angeordnet sind, und jeder Pol (11) des Stators (10) über die Polschuhe mit dem und über den ihm zugewandten Teil der Erregeranordnung des Rotors (20) direkt einen geschlossenen Magnetkreis bildet.

3. Elektromechanische Bedieneinrichtung mit einem Rotor und einem Stator, die mittels eines Bedienungshebels gegeneinander neigbar und/oder verdrehbar sind, von denen der eine Pole mit je zwei Polschuhen und Wicklungen und der andere eine Erregeranordnung, insbesondere Permanentmagnete enthält, zur Verwendung bei Flugzeugen, Schiffen, Fahrzeugen, beliebigen Maschinen etc.,
**dadurch gekennzeichnet,**
**daß** der Rotor (20) oder der Stator (10) fest angeordnet und der Stator (10) oder der Rotor (20) mittels eines Bedienungshebels (1) relativ zum Rotor bzw. Stator in verschiedene Richtungen neigbar und verdrehbar sind,
**daß** der Rotor (20) für jeden Pol (11) stromführende Leiterelemente (13) enthält, die zwischen den Polschuhen des jeweiligen Pols (11) angeordnet sind, und jeder Pol (11) des Rotors über die Polschuhe (11) mit dem und über den ihm zugewandten Teil der Erregeranordnung des Stators (10) direkt einen geschlossenen Magnetkreis bildet.

4. Elektromechanische Bedieneinrichtung nach einem der Ansprüche 1 bis 3,
**dadurch gekennzeichnet,**
**daß** die Polschuhe in Achsrichtung übereinander liegen.

5. Elektromechanische Bedieneinrichtung nach einem der Ansprüche 1 bis 4,
**dadurch gekennzeichnet,**
**daß** Rotor (20) und Stator (10) gegeneinander um einen Azimutwinkel neigbar und/oder verdrehbar sind.

6. Elektromechanische Bedieneinrichtung nach einem der Ansprüche 1 bis 5,
**dadurch gekennzeichnet,**
**daß** der Rotor (20) , zusätzlich zur Neigbarkeit, um eine neigbare Achse (14) drehbar ist.

7. Bedieneinrichtung nach einem der Ansprüche 1 bis 6,
**dadurch gekennzeichnet,**
**daß** der oder die Pole ringförmig so angeordnet sind, daß sie in ihrer Mitte die Erregeranordnung aufnehmen, so daß ein sich in den Polen aufgrund der stromführenden Leiterelemente (13) ausbildender magnetischer Fluß über die Erregeranordnung schließt.

8. Bedieneinrichtung nach einem der Ansprüche 1 bis 7,
**dadurch gekennzeichnet,**
**daß** die Permanentmagnet-Ringelemente (22) in axialer Richtung magnetisiert sind.

9. Bedieneinrichtung nach einem der vorstehenden Ansprüche,
**dadurch gekennzeichnet,**
**daß** die Pole und die Scheibenelemente aus ferromagnetischem Material bestehen.

10. Bedieneinrichtung nach einem der vorstehenden Ansprüche,
**dadurch gekennzeichnet,**
**daß** die Leiterelemente (13) Bestandteil von zumindest jeweils einer Spule je Pol sind, wobei die Spule mit einem nach Betrag und Vorzeichen variablen Strom gespeist ist.

11. Bedieneinrichtung nach einem der vorstehenden Ansprüche,
**dadurch gekennzeichnet,**
**daß** die Seiten der Spulen der jeweiligen Pole (11) in zwei in axialer Richtung übereinander angeordneten Nuten (12) angeordnet sind und
**daß** die bewegliche Erregeranordnung in Form des Rotors (20) zwei in axialer Richtung übereinander angeordnete Permanentmagnet-Ringelemente (22) in Form von Ringscheiben aufweist.

12. Bedieneinrichtung nach einem der Ansprüche 1 bis 11,
**dadurch gekennzeichnet,**
**daß** die Seiten der Spulen der Pole (11) in zwei in axialer Richtung übereinander angeordneten Nuten (12) angeordnet sind, und
**daß** die bewegliche Erregeranordnung in Form des Rotors (20) ein Permanentmagnet-Ringelement (22) in Form einer Ringscheibe aufweist.

13. Bedieneinrichtung nach einem der vorstehenden Ansprüche,
**dadurch gekennzeichnet,**
**daß** die ringförmig um den Rotor (20) angeordneten Pole (11) hinsichtlich der jeweiligen Achse der Kraftwirkung, welche von dem Bedienhebel (1) der Bedieneinrichtung ausgeht, unterschiedliche geometrische Gestaltung, Materialbeschaffenheit und/oder Ausführung der Spulen aufweisen.

14. Bedieneinrichtung nach einem der vorstehenden Ansprüche,
**dadurch gekennzeichnet,**
**daß** die ringförmig um den Rotor (20) angeordneten Pole (11) hinsichtlich der jeweiligen Achse der Kraftwirkung, die von dem Bedienhebel (1) der Bedieneinrichtung ausgeht, in paarweise unterschiedlichem geometrischen Winkel angeordnet sind (Figur 2).

15. Bedieneinrichtung nach einem der vorstehenden Ansprüche,
**dadurch gekennzeichnet,**
**daß** die ringförmig um den Rotor (20) angeordneten Pole (11) von dem Lagerpunkt (30) der Erregeranordnung in Form des Rotors unterschiedliche Abstände aufweisen.

16. Bedieneinrichtung nach einem der vorstehenden Ansprüche,
**dadurch gekennzeichnet,**
**daß** die Scheibenelemente (21) des Rotors kreisförmig ausgebildet sind.

17. Bedieneinrichtung nach einem der vorstehenden Ansprüche,
**dadurch gekennzeichnet,**
**daß** die Scheibenelemente (21) des Rotors (20) von ihrer Kreisform abweichend, insbesondere ellipsenförmig ausgebildet sind.

18. Bedieneinrichtung nach einem der vorstehenden Ansprüche,
**dadurch gekennzeichnet,**
**daß** in den Nuten (12) der Pole (11) mehrere elektrisch voneinander getrennte Spulen angeordnet sind.

19. Bedieneinrichtung nach einem der vorstehenden Ansprüche,
**dadurch gekennzeichnet,**
**daß** die in den Spulen fließenden Ströme durch von außen einer Regeleinheit (70) mit nachfolgender Stromstellereinheit (71) zugeführte Signale gesteuert bzw. geregelt sind.

20. Bedieneinrichtung nach einem der vorstehenden Ansprüche,
**dadurch gekennzeichnet,**
**daß** die Pole (11) in Richtung auf den Rotor (21) verschiebbar gelagert sind.

21. Bedieneinrichtung nach einem der vorstehenden Ansprüche,
**dadurch gekennzeichnet,**
**daß** die Pole (11) auf einem Kreisbogen um die Achse (14) verschiebbar gelagert sind.

22. Bedieneinrichtung nach Anspruch 1 oder 2,
**dadurch gekennzeichnet,**
**daß** im Rotor (20) Nuten (26) vorgesehen sind, die in der Ruhelage der Wicklung (13) zwischen den Polschuhen der Pole (11) gegenüberliegen.
